# EUROPEAN PATENT APPLICATION

(11) **EP 1 452 966 A2**
(43) Date of publication of application: **01.09.2004**
(21) Application number: 04003683.2
(22) Date of filing: 18.02.2004
(51) Int. Cl.: G06F 9/46, G06F 3/033, G06F 9/44

(54) **Method and system for enhancing the paste functionality of a software application**

(30) Priority: 28.02.2003 US 377258
(71) Applicant: MICROSOFT CORPORATION, Redmond, WA 98052 (US)
(72) Inventor: Jones, Brian Michael, N.E. Redmond Washington 98052 (US); Sawicki, Marcin, Kirkland Washington 98033 (US); Little, Robert A., Redmond Washington 98053 (US); Murray, Michael, Seattle Washington 98112 (US); Collie, Robert, Kirkland Washington 98033 (US); Tucker, Michael, Bellevue Washington 98005 (US)
(74) Representative: Grünecker, Kinkeldey, Stockmair & Schwanhäusser Anwaltssozietät

(57) **Abstract**

Methods and systems are provided for enhancing the paste functionality available to a computer software application for pasting data into a computer-generated document. Data is selected from a document to be pasted to a second document. The selected data is saved to a memory location, such a clipboard. Along with the selected data, information or data related to the selected data is saved for providing a consuming or pasting software application information about any data types associated the selected data. In response, the consuming application may obtain a namespace and an associated resource such as an Extensible Stylesheet Language Transformation file for transforming the selected data from a first data type associated with the first document to a second data type for pasting the selected data to the second document in order to maintain data structure and formatting in the pasted data as was applied to the selected data prior to pasting.

## Description

### Field of the Invention

This invention relates to methods and systems for enhancing the paste functionality available to a computer software application for pasting data into a computer-generated document.

### Background of the Invention

Computer software applications allow users to create a variety of documents to assist them in work, education, and leisure. For example, word processing applications allow users to create letters, articles, books, memoranda, and the like. Spreadsheet applications allow users to store, manipulate, print, and display a variety of alpha-numeric data. Such applications have a number of well-known strengths, including rich editing, formatting, printing, and calculation.

A very common and useful functionality of many software applications is the ability to cut or copy data from a given document, spreadsheet, slide presentation or other computer-generated document followed by a pasting operation where the cut or copied data is pasted to a desired location in the document. Often, a user cuts or copies data including text, images, or alpha-numeric data from a first or providing application, such as a word processing application, and then pastes the cut or copied data using a second or consuming application, such as a spreadsheet application. For example, a user may desire to cut or copy an array of numbers from a spreadsheet application document in order to paste those numbers into a word processing application document where the user is preparing a letter to send to a client or associate. Typically, when data is cut or copied, the data is buffered in a memory location for subsequent pasting during the pasting operation.

When data is cut or copied from a providing application, and is then pasted into a separate document by a second consuming application where the providing application and the consuming application are different software applications, often many, if not all, of the features provided by the first application, including formatting, are lost during the pasting operation because the second or consuming application does not include the functionality necessary for providing special features, including formatting, that were provided by the first application. For example, if the user copies an array of data from a spreadsheet application document and then pastes that data into a word processing document, the data pasted into the word processing document may be pasted without any of the formatting that was present in the spreadsheet application. That is, if the data in the spreadsheet application was set out in a number of columns and rows, the data may be pasted into the word processing application as a simple sequence of numbers without any formatting.

To keep up with demand for more advanced functionality in software applications, software developers have begun to use markup languages, such as the Extensible Markup Language to allow users to annotate a software application document to give the document a useful structure apart from the normal functionality of the software application responsible for creating the document or the visible formatting associated with the document. For example, a user may wish to create on her word processing application a template document for preparation of an article that she wishes to transmit to a publisher. By applying structure to the document, a publisher receiving the document may make use of the structure by processing the document to utilize data defined by the document structure. Unfortunately, when data is cut or copied from a document having such structural annotation, often the structural annotation is lost in the pasting operation, particularly when the pasting operation is performed by a different consuming application. Even if the consuming application is programmed to understand and use the markup language, the schema, or rules defining the structural annotation of the markup language, may be significantly different for the providing application as opposed to the consuming application.

It is with respect to these and other considerations that the present invention has been made.

### Summary of the Invention

The present invention provides methods and systems for enhancing the paste functionality available to a computer software application for pasting data into a computer-generated document. Generally described, data is selected from a first application for pasting to a second application document. The selected data along with information associated with the data such as a list of namespaces is saved to a memory location. When the selected data is pasted to the second application or consuming application document, the consuming application checks an available list of namespaces associated with the selected data to see if any of the various representations of the data are understood by the pasting application. The pasting application may also look to see if any resources such as an Extensible Stylesheet Language (XSL) transformation files for transforming the selected data to a format that is more readily consumable by the second or consuming application are available. One method for finding resources to assist with the available namespaces is for the consuming application to check a namespace library for an available resource for transforming the data for use by the consuming application. If no resources are found, and the namespaces are not already natively understood by the pasting application the data may be pasted to the second application document according to a default paste resource. The pasting application may also have a default method for dealing with any type of data regardless of the namespace.

More particularly, a method of enhancing the paste functionality of a computer software application is provided. A first document is opened via a providing application and structure is applied to the first document according to a markup language, such as Extensible Markup Language (XML). It could also be that the first application is only serving the purpose of displaying existing data in a meaningful way. Data is selected from the first application for pasting to a second application. The selected data is saved to a memory location, and information associated with the selected data is saved to the memory location for providing the consuming application information about the selected data. This information primarily consists of a list of namespaces. These namespaces identify the different ways the copying application has for representing the data. An example of this would be a spreadsheet document that has financial data. One of the namespaces provided may be for describing a spreadsheet, and the other namespace provided may be for describing financial data.

A second document is opened via a consuming application and a paste function is selected at the consuming application for pasting the selected data to the second document. The consuming application reads the information associated with the selected data. In response, the consuming application determines whether one or more namespaces that identify data types associated with the selected data are natively understood by the consuming application. If there are more than one namespaces, the application may either give the user a choice of which namespace and associated resources to use, or the application may choose the namespace and associated resources that best fits the data already in the consuming application document. The choice presented may be a choice of which namespace to use, or it may be a choice of which resource for any one given namespace to use. The consuming application may obtain one or more resource files, such as XSLT transformation files associated with namespaces for pasting the selected data to the second document if the consuming application does not already understand that namespace. After the consuming application selects one of the one or more namespaces for pasting the selected data to the second document, the selected data is pasted to the second document according to the method the consuming application prefers. The additional resource sometimes used may be an Extensible Stylesheet Language Transformation (XSLT) file for transforming the selected data into a data type or format consumable by the second or consuming application.

According to one aspect of the invention, prior to obtaining a resource for the one or more namespaces for pasting the selecting data, a determination is made as to whether an available namespace list contains a desired namespace of the one or more namespaces understood by the consuming application. If the available namespace list contains a desired namespace of the one or more namespaces understood by the consuming application, the desired namespace is selected and provided to the consuming application. If the available namespace list does not contain a desired namespace of the one or more namespaces understood by the consuming application, a determination is made as to whether a namespace library contains a resource for assisting the consuming application with understanding the one or more namespaces for use by the consuming application. If the namespace library contains a resource for the one or more namespaces for use by the consuming application, the desired resource is selected from the namespace library and is provided to the consuming application to assist it with consuming the one or more namespaces.

The information associated with the selected data is saved to a memory location for providing to the consuming application and may include an indication as to the presence of one or more namespaces associated with the selected data. For each namespace associated with the selected data, the information associated with the selected data may include information about any associated namespace including a version identifier for the namespace, a uniform resource identifier for locating the namespace, and a file size for the namespace.

According to another aspect of the invention, a method for pasting data from a copying application to a consuming application is provided. A first Extensible Markup Language (XML) element is applied to a beginning of a region of a first document. The region is selected for copying from the copying application and for pasting to the consuming application. A second XML element is applied to an end of the selected region. Information is provided in a header associated with the selected region. The information includes an identification of available XML namespaces and pointers to a clipboard format identification that corresponds to each of the available namespaces. Information is provided in the header on a file size for each the available namespaces. One or more namespaces of the available namespaces is provided on a clipboard to allow the consuming application to choose among the one or more namespaces for pasting the data from the copying application.

These and other features and advantages, which characterize the present invention will be apparent from a reading of the following detailed description and a review of the associated drawings. It is to be understood that both the foregoing general description and the following detailed description are exemplary and explanatory only and are not restrictive of the invention, as claimed.

### Brief Description of the Drawings

Fig. 1 is a block diagram of a computer and associated peripheral and networked devices that provide an exemplary operating environment for the present invention.
Fig. 2 is a simplified block diagram illustrating the interaction between a providing application and a consuming application where data is cut or copied using the providing application and pasted using the consuming application.
Fig. 3 is a simplified block diagram illustrating user interfaces for providing users enhanced paste functionality according to an exemplary embodiment of the present invention.
Fig. 4 illustrates a computer screen display of a software application pasting and consuming data cut or copied from a providing application.
Figs. 5 and 6 are flow charts illustrating a method for enhancing the paste functionality of a consuming application according to an embodiment of the present invention.

### Detailed Description of the Preferred Embodiment

The following description of embodiments of the present invention is made with reference to the above-described drawings wherein like numerals refer to like parts or components throughout the several figures. The present invention is directed to methods and systems for enhancing the paste functionality available to a computer software application for pasting data into a computer-generated document. A user selects data from a first application, such as a spreadsheet application, for pasting to a second application, such as a word processing application. The pasting process may be in the form of a traditional cut/copy and paste operation or may be in the form of dragging and dropping selected data from a first application document to a second application document. According to an embodiment of the present invention, the first or providing application writes the selected data in an Extensible Markup Language (XML) representation to a memory location, such as a clipboard. The selected data is written to the memory location in a format that includes the selected data and information associated with one or more data namespaces associated with the selected data. Available namespaces associated with the selected data may identify the types of data formatting that may be associated with the selected data. For example, identified available namespaces may include Hypertext Markup Language (HTML), resume document, or word processor XML. The HTML namespace might identify that the data may be structured as HTML. The resume document namespace might identify that the data may be structured according to a resume XML schema file. The word processor XML namespace might identify that the data may be formatted according to a word processor version of XML. Of course, these namespaces are by way of example only of numerous types namespaces that may be associated with the selected data.

When the selected data is pasted to the second application document by selecting the second application paste functionality or by dropping the selected data onto the second application document, the second or consuming application detects from the information provided with the selected data that XML formatted data is being pasted. Based on the information provided with the selected data, the consuming application detects all of the available namespaces associated with the data to be pasted. For example, from the foregoing example, the consuming application may detect that the selected data has associated namespaces for HTML, resume document, and word processor XML. In response, the consuming application looks to a list of available namespaces for a resource to help the consuming application paste the selected data. For example, if the providing application is a spreadsheet application, the consuming application may look to the list of available namespaces for an Extensible Stylesheet Language Transformation (XSLT) file for transforming the spreadsheet XML formatted data into a format for consumption and use by the consuming application. If the consuming application is a word processor, the consuming application may look for an XSLT transformation file for transforming the spreadsheet data into data for consumption by the word processing application. For example, if the data was structured in the spreadsheet application in a format comprised of two rows and three columns, the XSLT transformation file used by the consuming application may transform that data for consumption by the word processing application so that the data will be maintained in a format of two rows and three columns. Without the functionality of the present invention, the data may be pasted according to the default paste functionality of the consuming application and thus may be pasted without the formatting of the providing application. Consequently, the data may be pasted to the word processor application document, according to the present example, as raw data presented from left to right across the word processor work space as opposed to being formatted in two rows and three columns.

If multiple available namespaces are identified to the consuming application, the consuming application may select the available namespace that most likely provides the consuming application with the desired pasting functionality. Or, a user interface may be provided to the user of the consuming application to allow the user to select among the available transformation files that the application is aware of for the list of available namespaces. If no resources are found by the consuming application in the list of available namespaces, the consuming application may go to a namespace library in search of an available resource for assisting the consuming application in transforming the selected data prior to pasting the data to the consuming application document. If multiple resources are located in the namespace library, a user interface may be provided for allowing the user to choose among available resources. If no available resources are located in either the list of available namespaces or the namespace library, then the consuming application pastes the data according to the default functionality, as described above.

### Operating Environment

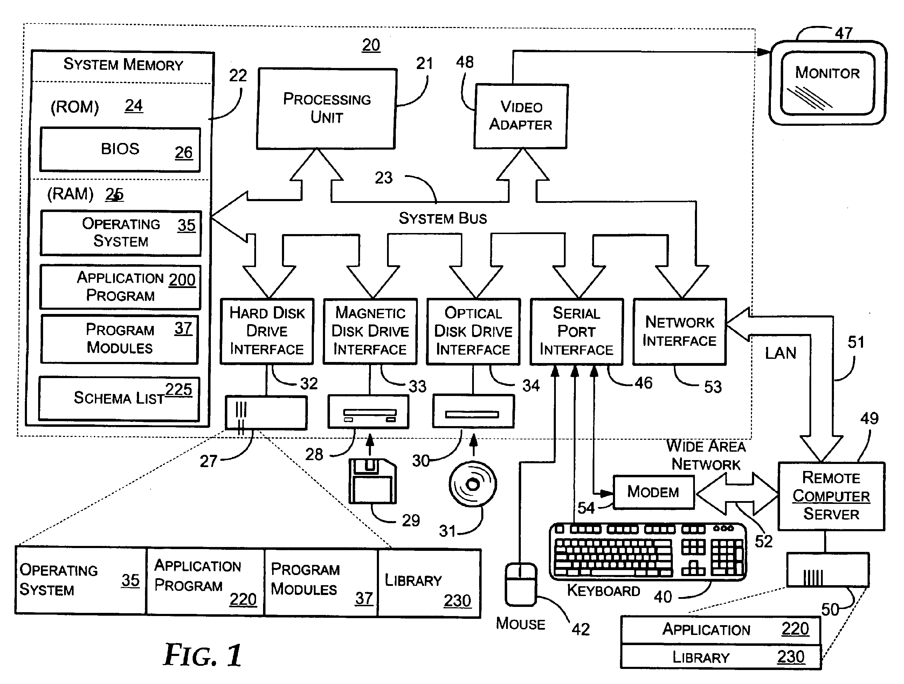

Fig. 1 and the following discussion are intended to provide a brief, general description of a suitable computing environment in which the invention may be implemented. While the invention will be described in the general context of an application program that runs on an operating system in conjunction with a personal computer, those skilled in the art will recognize that the invention also may be implemented in combination with other program modules. Generally, program modules include routines, programs, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, cell phones, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to Fig. 1, an exemplary system for implementing the invention includes a conventional personal computer 20, including a processing unit 21, a system memory 22, and a system bus 23 that couples the system memory to the processing unit 21. The system memory 22 includes read-only memory (ROM) 24 and random access memory (RAM) 25. A basic input/output system 26 (BIOS), containing the basic routines that help to transfer information between elements within the personal computer 20, such as during start-up, is stored in ROM 24. The personal computer 20 further includes a hard disk drive 27, a magnetic disk drive 28, e.g., to read from or write to a removable disk 29, and an optical disk drive 30, e.g., for reading a CD-ROM disk 31 or to read from or write to other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide non-volatile storage for the personal computer 20. Although the description of computer-readable media above refers to a hard disk, a removable magnetic disk and a CD-ROM disk, it should be appreciated by those skilled in the art that other types of media which are readable by a computer, such as magnetic cassettes, flash memory cards, digital video disks, Bernoulli cartridges, and the like, may also be used in the exemplary operating environment.

A number of program modules may be stored in the drives and RAM 25, including an operating system 35, one or more application programs 200, 220, program data, such as the available namespace list 225, and other program modules (not shown).

A user may enter commands and information into the personal computer 20 through a keyboard 40 and pointing device, such as a mouse 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a game port or a universal serial bus (USB). A monitor 47 or other type of display device is also connected to the system bus 23 via an interface, such as a video adapter 48. In addition to the monitor, personal computers typically include other peripheral output devices (not shown), such as speakers or printers.

The personal computer 20 may operate in a networked environment using logical connections to one or more remote computers, such as a remote computer 49. The remote computer 49 may be a server, a router, a peer device or other common network node, and typically includes many or all of the elements described relative to the personal computer 20, although only a memory storage device 50 has been illustrated in Fig. 1. The server 49 and memory 50 may hold application programs such as the application 220 and data storage such as the namespace library 230. The logical connections depicted in Fig. 1 include a local area network (LAN) 51 and a wide area network (WAN) 52. Such networking environments are commonplace in offices, enterprise-wide computer networks, intranets and the Internet.

When used in a LAN networking environment, the personal computer 20 is connected to the LAN 51 through a network interface 53. When used in a WAN networking environment, the personal computer 20 typically includes a modem 54 or other means for establishing communications over the WAN 52, such as the Internet. The modem 54, which may be internal or external, is connected to the system bus 23 via the serial port interface 46. In a networked environment, program modules depicted relative to the personal computer 20, or portions thereof, may be stored in the remote memory storage device. It will be appreciated that the network connections shown are exemplary and other means of establishing a communications link between the computers may be used.

### Operation

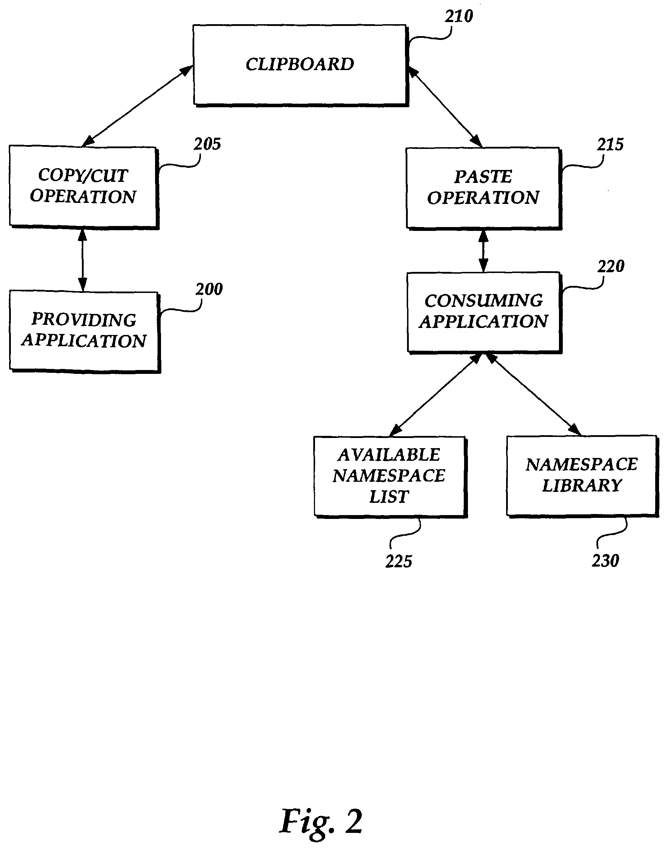

Fig. 2 is a simplified block diagram illustrating the interaction between a providing application and a consuming application where data is cut or copied using the providing application and pasted using the consuming application. As shown in Fig. 2, a providing application 200 is illustrated from which cut or copied data is saved for use by a consuming application 220. A providing application may be any software application from which data may be cut or copied for later pasting, including a word processing application, a spreadsheet application, a slide presentation application, and the like. Once a user selects data using the providing application 200, a cut or copy operation 205 is performed which may include cutting the selected data from the providing document or may include copying the selected data from the providing document. Once the selected data is cut or copied, that data is transferred to a memory location 210, such as the clipboard 210 illustrated in Fig. 2. The memory location 210 holds the cut or copied data for subsequent pasting by the original providing application 200 or by the consuming application 220 as selected by the user.

According to an embodiment of the present invention, the clipboard 210 is illustrative of a memory resource maintained by windowing operating systems. The clipboard stores a copy of the data that is copied or cut, and a subsequent paste operation passes the data from the clipboard 210 to the consuming program. As is well known to those skilled in the art, the clipboard 210 allows data to be transferred from one application to another, as described above, provided that the second or consuming application 220 can read the data generated by the providing application 200. In order to ensure that the consuming application can read, understand, and utilize the data cut or copied by the providing application 200, typically, the data cut or copied by the providing application is saved to the clipboard 210 in a generic format, such as Hypertext Markup Language format, so that the data is most likely in a format that may be consumed by a number and variety of different consuming applications 220. Other types of formatting include rich-text formatting, or the data may be saved as unformatted data. All of these formats are advertised on the clipboard when the first application copies. It is then up to the pasting application to decide which of the available formats it would like to request.

Once the consuming application 220 is launched for pasting the cut or copied data from the providing application 200, a paste operation 215 is selected to paste the cut or copied data a desired location into a document operated by the consuming application. As should be understood, the cut/copy operation 205 and the paste operation 215 may be combined in the form of a drag and drop operation where selected data is dragged from a providing application document and is dropped into a consuming application document. If the cut or copied data was formatted by the providing application according to a number of generic formatting types, as described above, the consuming application may be able to paste the cut or copied data, as desired, but many of the features provided to the data by the providing application, including specialized formatting, is often lost. For example, if the user cuts or copies data entered in tabular form in a word processing providing application 200 and subsequently pastes that data into a spreadsheet consuming application 220, the data originally formatted in tabular form may be simply inserted into a single cell within the spreadsheet rendering the spreadsheet application unable to operate on the data as desired by the user of the spreadsheet consuming application 220.

With the advent of markup languages, such as the Extensible Markup Language (XML) often documents prepared by the providing application 200 have been annotated with markup language structure in order to give the document useful structure for managing, presenting and manipulating data contained in the document. As is well known to those skilled in the art, different software applications include different "native" programming for reading, understanding, and utilizing a markup languages such as XML. That is, a providing application 200 may be programmed to provide different or more XML structure and functionality as compared to a consuming application 220. Accordingly, if data is cut or copied from an XML-formatted document created by a providing application 200 for consumption by a different consuming application 220, much of the structure and functionality associated with the XML formatting of the cut or copied data may be lost when the consuming application 220 pastes the data into a document created and operated by the consuming application 220.

The following is a sample XML structure that may be applied to an article written by a user with a word processing providing application 200.

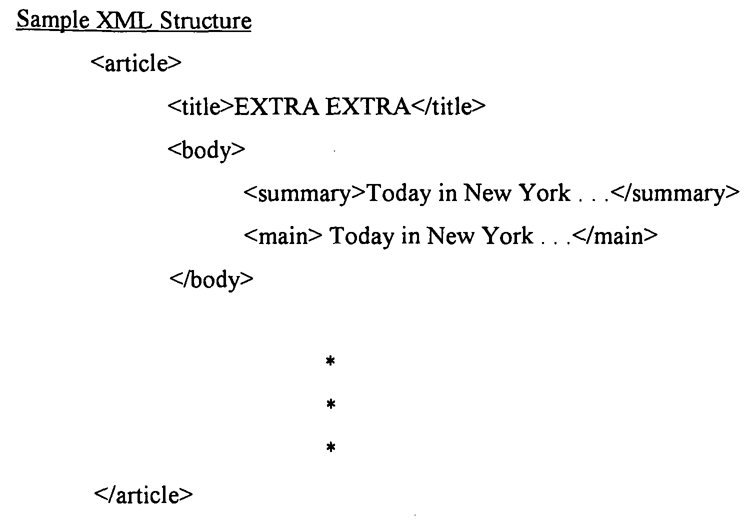

As shown in the sample XML structure, a number of XML elements are illustrated annotating the "article" document. For example, the <article> tag is included at the beginning and end of the document to define the document as a "article" document, and a variety of other elements such as a <title> element, and <body> element are included inside the "article" structure. Inside the <body> element are two child elements, <summary> and <main>, of the <body> element. The XML annotation of the document allows the user to define portions of the document for certain types of data and data structure. For example, the user may define the portion of the document inside the <title> element for including data of the type "title" and including a prescribed allowable structure for the title.

In order to provide the document with a set of grammatical and data type rules governing the types and structure of data that may be included in a given document such as the "article" document illustrated above, an XML schema is attached to or associated with the document for providing the rules governing each of the XML elements and tags with which the user may annotate the given document. For example, the "article" document may have an attached or associated schema such as "article-schema.xsd" for providing the allowable set of XML elements such as the <article> element, <title> element, <body> element, and so on. The schema includes the rules governing the order with which those elements may be applied to the document and specific rules associated with individual elements applied to the document. For example, a schema attached or associated with the "article" document may prescribe that data associated with a given element, for example a <date> element (not shown above), must include a day element, followed by a month element, followed by a year element. Additionally, the schema may require that a <date> element must immediately precede the <title> element.

As is understood by those skilled in the art, developers of XML schemas determine the names of XML elements and the associated data types and data structures allowed for those elements. Then, all users of documents annotated with XML structure according to a given schema may utilize the data contained within the XML structure without regard to the overall type and structure of the document. For example, if the "article" document, illustrated above, is transmitted to a publisher of the document, the publisher may develop software applications for parsing the document to locate specific types of data within the document for use by the publisher. The publisher may, for example only wish to publish the title of the article as an advertisement for the future publication of the whole article. The way in which XML is identified is through a namespace. The namespace provides an identification (ID) such that any consumer of the XML will know what type of XML they are consuming. By observing the namespace, the consuming application will know what schema was used to create the XML file. Using the namespace specified in the document, the publisher will know that the data associated with the XML element <title> has been prepared according to the schema governing the document. Accordingly, the publisher may develop a software application or an XSLT transformation file for locating the <title> element and for extracting the data associated therewith for insertion into the publisher's own document (including formatting it in some special way) for using that data as an advertisement for the future publication of the whole article.

Following with this example, a number of different publishers may subscribe to the same namespace for dictating the rules associated with the "article" document so that each publisher may then receive the "article" document from the author of the document and use the data contained in the article according to the XML elements structuring the data. That is, a first publishing company may only be interested in the data contained within the <summary> element, while a second publisher may be interested in extracting only the data contained in the <title> element. Each publisher may extract the data it desires without regard to other aspects or elements of the document by using their own software applications or XSLT transformation files for locating the desired data according to the XML structure. This is made possible by the fact that each user of the document follows the data type and data structure rules prescribed in the namespace attached to or associated with the document.

If the consuming application does find an XSLT transformation file for use with one of the available namespaces then the selected data is converted by the XSLT transformation file and the results are recieved by the consuming application as part of the paste function. It may also be the case that the consuming application is aware of a transform file, and it consumes the available namespace and performs the transform on that data itself. For example, as described above, if the providing application is a spreadsheet application and the selected data was formatted in two rows and three columns, then the XSLT transformation file for transforming the spreadsheet data for consumption by a word processing application, for example, may allow the data to be transformed so that the word processing application may paste the data as two lists with three items in each as opposed to raw data without formatting or the table form used in the spreadsheet. As should be understood, the first or providing application document may be marked up according to a custom XML schema. For example, the data may be marked up according to a "stock price schema." In that case, if the selected data is copied for pasting from a spreadsheet application into a word processing application, for example, the namespace associated with the "stock price schema" as well as the namespace associated with the visual layout of the spreadsheet will be associated with the selected data when the selected data is written to memory for pasting into the word processing application.

Upon recognizing the "stock price schema", the consuming application references the list of available resources and detects that each cell of the selected data is a company stock symbol, and that for each company, there is an associated description for the company. Accordingly, the consuming application will locate a resource such as an XSLT transformation file in the list of available namespaces or namespace library to instruct the consuming application on how to paste the marked up data. The user interface provided to the user of the consuming application may provide the option to "paste company synopsis." If the user selects the "paste company synopsis", the XSLT transformation file associated with that paste function may allow the consuming application to paste the company stock symbols selected from the providing application along with a company synopsis that may be imported via the paste function selected by the user from the available namespaces associated with the selected data. This solution is better than the alternative of choosing the spreadsheet namespace and pasting the data in the same way it was represented in the spreadsheet.

As understood by those familiar with the Extensible Markup Language, XML namespaces provide a method for qualifying elements and attribute names used in XML documents by associating those elements and attribute names with namespaces identified by uniform resources identifier (URI) references. XML namespaces are collections of names, identified by URI references, that are used in XML documents as element types and attribute names. A single XML document may contain elements and attributes that are defined for and used by multiple software modules. For example, in accordance with an embodiment of the present invention, a single XML document, such as a word processing document, may contain elements and attributes defined and used by different software modules. For example, a word processing document may have elements and attributes defined for and used by an HTML processing module, a word processing application XML processing module, or the document may contain elements and attributes defined for and used by or associated with one or more schema files associated with the document. For example, elements and attributes may be associated with the word processing document to associate the document with a schema file associated with a resume document, a legal document, and the like. Accordingly, an individual document, such as the exemplary word processing document may have a namespace identifying the element types and attribute names associated with each of the different software modules that may consume or use data from the document. Following from the examples listed above, the word processing document may contain a namespace associated with the HTML processing module, a namespace associated with the word processing XML processing module, and a namespace associated with the resume or legal document schema files.

According to an embodiment of the present invention, when data is selected for pasting to a second application document, information identifying namespaces associated with the selected data is provided with the selected data for informing the second or consuming application of the namespaces associated with the selected data so that the second or consuming application may operate on the element types and/or attributes associated with the selected data according to the programming of the second application. For example, if the first application is a word processing application and the second application is a spreadsheet application, the spreadsheet application may utilize information identified by the namespaces associated with the selected data to determine that the selected data will be optimally pasted to the second application document by utilizing an XSLT transformation file associated with the element types and attributes associated with one of the given namespaces. For example, if one of the given namespaces identifies element types and attributes associated with manipulating data contained in the selected data, but other namespaces are associated with displaying the selected data, the second application, spreadsheet application according to this example, may select the namespace associated with manipulating the data of the selected data, as opposed to namespaces associated with displaying the data.

After the consuming application detects the namespaces associated with the XML data selected from the first application document, according to an embodiment of the present invention, the consuming application may look to a list of available namespaces or to a namespace library to find resources that may be used by the consuming application for transforming the selected data for optimum consumption by the second or consuming application. For example, if the second application is a spreadsheet application attempting to paste data selected from a word processing application, the second application may look to a list of available namespaces or a namespace library to obtain an XSLT transformation file that may be used by the second application for transforming the word processor XML data into spreadsheet XML data for optimum consumption by the spreadsheet application. As is understood by those skilled in the art, the Extensible Stylesheet Language (XSL) includes and XML vocabulary for specifying formatting of data. XSL specifies the styling of an XML document by using XSL information files to describe how a document is transformed from one XML document into another XML document or other type of document such as an HTML document.

Referring still to Fig. 2, namespaces may be attached to the document prepared by the providing application, or a namespace may be maintained in a separate location such as a namespace library 230 accessible by the document. The document may contain a file path pointer or unique namespace identifier (e.g., uniform resource identifier or uniform resource name) for locating and/or identifying the namespace. For a detailed description of the namespace library 230, see U.S. Patent Application entitled "System and Method for Providing Namespace Related Information", Serial No. 10/184,190, filed June 27, 2002, which is incorporated herein by reference as if fully set out herein. For a detailed description of a method for downloading a namespace from the namespace library 230 for use by a providing application 200 or consuming application 220, see U.S. Patent Application entitled "Mechanism for Downloading Software Components from a Remote Source for Use by a Local Software Application," Serial No. 10/164,260, filed June 5, 2002, which is incorporated herein by reference as if fully set out herein.

Once the user downloads or otherwise obtains a namespace and its related information for use with documents created by the user, that namespace may be loaded into an available namespace list consisting of that namespace and its resources, as well as any other namespace that has already been installed. That list 225 maintained on the user's computer 20 or accessible to the user from a remote storage location such as a server 49 operated via a distributed computing network. The available namespace list may include namespaces associated with data contained in the providing application document and the namespaces may included information allowing the consuming application to locate and obtain the resources, such as XSLT transformation for assisting the consuming application with transforming the selected data for consumption by the consuming application.

Consider for example that a user cuts or copies data prepared in tabular form using a word processing providing application 200. Prior to cutting or copying the data, the data is structured with XML annotations according to the native XML programming of the providing application 200. If the consuming application 220 via the paste operation 215 is caused to paste the cut or copied data from the clipboard 210, the consuming application 220 may call upon the available namespace list 225 to see if a namespace or appropriate XSLT transformation file for one of the namespaces is available for enhancing the native XML programming of the consuming application 220 so that the consuming application 220 may paste the data cut or copied from the word processing providing application 200 in the same formatting (for example, tabular format) as was applied to that data using the providing application 200. For example, a resource file (XSLT transformation in this case) such as "wordprocessor-to-spreadsheet-schema.xsl" may be found in the available list 225 for use by the consuming application to transform from the available word processor namespace into the understood spreadsheet namespace. Accordingly, when the consuming application obtains the additional XSLT transformation, the consuming application's native XML programming is enhanced to allow the consuming application (for example, a spreadsheet application) to now use the data received from the providing application according to the namespace transform obtained from the available namespace list. That is, by obtaining the XML namespace from the available namespace list, the consuming application receives the XML grammatical and data rules required for treating the data received from the providing application in the same manner as that data was created and treated by the providing application.

According to embodiments of the present invention, if data is structured using the providing application according to a given XML namespace, the user via the consuming application may paste the cut or copied data into the consuming application according to a selected third party XSLT transformation file. For example, is a user of a consuming application 220 receives data cut from the "article" document described above, the user of the consuming application 220 may call upon the resources of the available namespace list to determine whether transformation files associated with a variety of publishers are available for structuring the document in the consuming application according to the requirements of a particular publisher. The user of the consuming application then may call upon the resources of the available namespace list 225 for a transformation file that will allow the consuming application 220 to utilize the data according to a desired namespace. If the desired namespace is not present in the available namespace list 225, the user may call upon the local or remote namespace library 230 to locate additional resources for the namespaces provided for use by the consuming application for using the data obtained from the providing application 200.

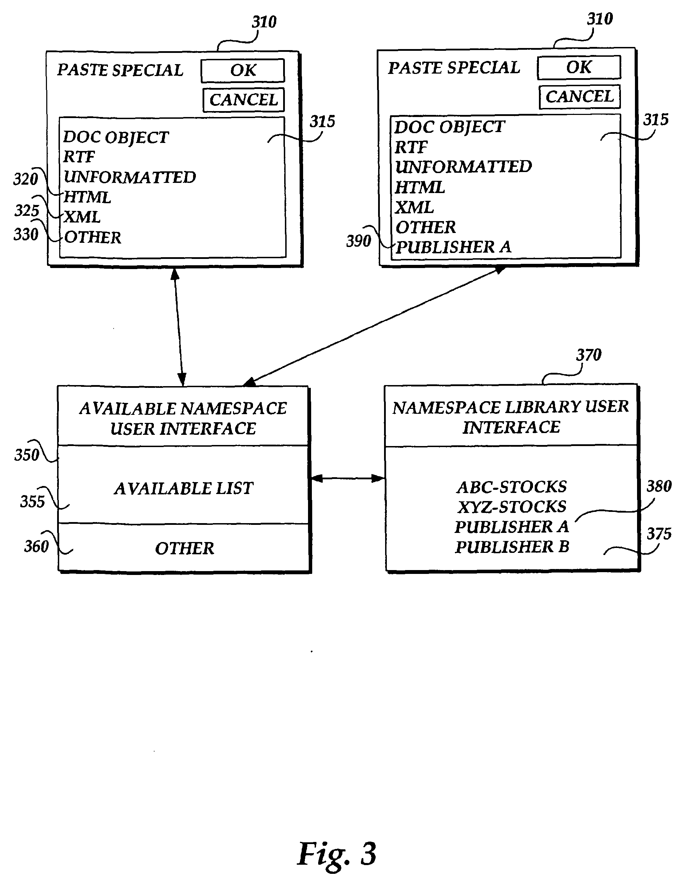

Fig. 3 is a simplified block diagram illustrating user interfaces for providing users enhanced paste functionality according to an exemplary embodiment of the present invention. Once the user of the consuming application 220 selects the paste operation 215 of the consuming application 220, a variety of paste options may be provided to the user. For example, the user may select a simple paste operation that will paste the data cut or copied from the providing application into the document being used on the consuming application according to a default formatting, such as HTML formatting. If the user desires enhanced paste functionality according to the embodiments of the present invention, the user can select an alternate paste function such as the paste special function illustrated in Fig. 3.

The paste special user interface 310 illustrates a list of pasting options available to the user. For example, the user may select that the data be pasted in rich-text formatting (RTF), or the user may select that the document be pasted according to an HTML format 320. As illustrated in the user interface 310, the user may also select that data be pasted according to an XML format 325 without the enhanced functionality of the present invention. That is, the cut or copied data is pasted by the consuming application 220 according to the XML programming that is native to the consuming application 220. If the user desires to paste data according to some enhanced functionality, as described herein, the user may select the "other" button 330 of the user interface 310 to launch an available schema user interface 350. With the available schema user interface 350, the user may select the available list 355 to check to see what namespaces and associated XSLT files are available on the available namespace list 225, as described above with reference to Fig. 2. Accordingly, selection of a given transformation file provides the consuming application in use by the user the enhanced functionality of the selected XSLT file for operating on the data cut or copied from the providing application as that data would have been used or formatted by the providing application.

If the available namespace list does not have namespaces or other resources desired, the application may also launch the namespace library feature 370 in order to provide a larger list of available data views that may be obtained from the local or remote namespace library 230, as described above with reference to Fig. 2. If the user selects an available view from the namespace library 230 via the user interface 370, the paste special user interface 310 is presented to the user with an updated list of available paste functions including the paste function enabled by the selected namespace. As should be understood, a view in one case may be any combination of namespaces and their associated XSLT transformations. The XSLT transformation will transform the available namespace into a namespace natively understood by the consuming application. The different namespaces usually represent different types of data, and the different XSLTs represent different views on those different types of data. As shown in Fig. 3, selection of the "Publisher A" XSLT 380 from the namespace library user interface 370 causes the paste special user interface 310 to be populated with a "Publisher A" paste function 390. Accordingly, the user may then select the "Publisher A" paste function 390 in order to apply the downloaded "Publisher A" transformation 380 for allowing the consuming application 220 to paste the data received from the providing application 200 according to that XSLT file provided by the publisher A. The transformation is identified as being associated with converting the "Publisher A" namespace into the namespace the consuming application understands. As should be understood by those skilled in the art, the particular XSLT files described herein with reference to Figs. 2 and 3 are for purposes of example only as any different XSLT files or any other method of converting or interpreting a particular namespace may be made available to the consuming application 220 for providing enhanced paste functionality to the cut or copied data received from the providing application 200.

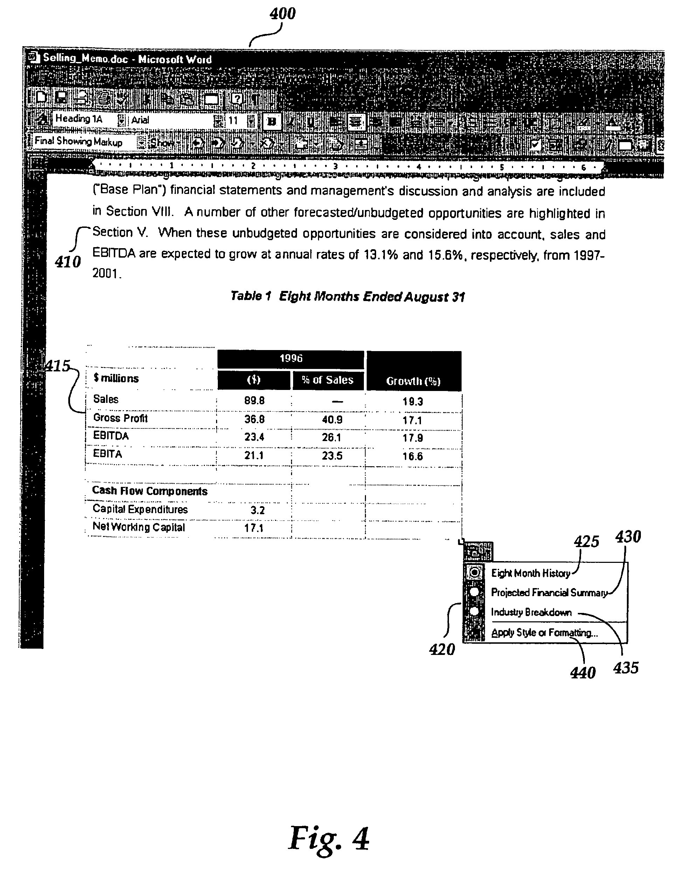

Fig. 4 illustrates a computer screen display of a software application pasting and consuming data cut or copied from a providing application. The screen shot 400 shows an exemplary word processing application where a user is preparing a document 410. According to an embodiment of the present invention, the user has pasted data into a table that was copied from a spreadsheet providing application 200. During the paste operation to paste the data into the document 410, a dialog box 420 is presented to the user showing the user three different data formats including the "Eight Month History" format 425, the "Projected Financial Summary" format 430 and the "Industry Breakdown" format 435. As should be understood, the dialog box 420 is an alternative dialog box to the dialog box 310 illustrated in Fig. 3. According to the example data shown in Fig. 4, the user has selected the "Eight Month History" format 425 which is a view of one of the namespaces in the available namespace list 225 to cause the data received from the providing application (for example, spreadsheet application) to be formatted in the document 410 according to an XSLT file dictating the XML structure for an "Eight Month History." As should be understood, a transform resource such as "eightmonthhistory-schema.xsl" may be available on the available namespace list or in the namespace library 225 that allows the consuming application to support an XML structure for providing the "Table 1" formatting, illustrated in Fig. 4. If the user had chosen to cut and copy information related to the "Industry Breakdown" format, from the providing application, the user may then select the "Industry Breakdown" format 435 so that the data cut or copied from the providing application will be formatted in the consuming application according to the format under which that data was structured by the providing application.

According to an embodiment of the present invention, when data is cut or copied in an XML format and is saved to the clipboard 210 for subsequent pasting by a consuming application 220, three or more clipboard formats can be utilized to assist the consuming application in determining how to process the cut or copied data according to the functionality of the present invention. The three formats include the CF_XML_HEADER, CF_XML_VIEW, and CF_XML_DATA. As described above, many applications including the providing application 200 and the consuming application 220 support XML markup structure and files created by those applications. However, as described above, often the XML support of one application is incompatible with the XML support of another application, and consequently, formatting and other XML related features are lost when data from one application is copied to files of a consuming application. Additionally, as described above, XML schemas also exist as provided by third parties for use by a variety of applications but that are not supported by the native XML programming of the application.

The CF_XN4L_HEADER format ("HEADER") contains information on what namespace the copying application has available. The CF_XML_HEADER is where all pasting applications can look to decide if there is one or more namespaces that they are able to consume. The HEADER also identifies where the different namespaces can be found, so that the pasting application, upon deciding on the namespace or namespaces it wants to consume, can then call back to get the desired data. On place the HEADER may identify as containing the desired namespace(s) is the CF_XML_DATA format. The information is useful to the consuming application, because the consuming application may be able to determine which formats it would like to consume. This can help with performance issues since the copying application does not need to provide all the data in the different formats until those specific formats are requested. For the rest of this description, we will assume that there are two formats available.

The first clipboard format is CF_XML_VIEW that has one or more namespace(s) and is usually more of a formatting markup rather than a data markup (such as "spreadsheetML; or documentML"). The second clipboard format is CF_XML_DATA with contains one or more namespaces that do not define the formatting or view, but instead define the data underneath. These two formats in action can easily be seen by using an example involving a spreadsheet program. If that spreadsheet program supports XML structures, then it could be imagined that a namespace defining financial data could be applied to this spreadsheet to identify the different cells and how they relate to financial data. When the spreadsheet application performs a copy operation, it will have two ways of presenting the data. The first way it to present it as it appears in the spreadsheet, and that would use the spreadsheet markup language. The spreadsheet markup language defines the general things seen in a spreadsheet such as formatting, layout, etc. This data would be placed on the CF_XML_VIEW clipboard format since it best defines how the data "looks." That may be useful to the person pasting the data if they are more concerned with the look and the layout than they are with the underlying data's meaning.

The second way to present the data on the clipboard is to use the financial data's namespace. This namespace has no information involving the look or layout of the data, but instead describes what the data itself means. This data would be placed on the CF_XML_DATA clipboard format. The consuming application would need to decide for itself how to best display this data, since the layout information is not available. In the case of pasting into a word processing application, for example, this may be the more desired format. The reason for this is that the way the financial data looks while in a spreadsheet may be completely different than how it should appear in a word processor application. The word processor application would need to look at the financial data namespace, and then find some view information, such as an XSLT transformation to help it display the data in the proper way.

By splitting the different namespaces out into different clipboard formats, it is much more efficient, since the consuming application may not need either or both of the "VIEW" or "DATA" formats from the providing application. That is, if based on the paste function selected by the user, the consuming application determines that it does not need the information contained in either the "VIEW" or "DATA" formats, the consuming application will not load data from those formats for use by the consuming application. If the consuming application is the same type application (for example, word processing application) as the providing application, the consuming application may not require additional paste functionality to perform the paste operation selected by the user. The CF_ XML _HEADER format contains information on the version and namespace for both the "DATA" and the "VIEW" formats. The header format also includes information on the size of each of the DATA and VIEW format files. An example of CF_XML_HEADER format associated with a data fragment copied from a word processing file marked up with a third party "Get A Job.com" XML schema is as follows.

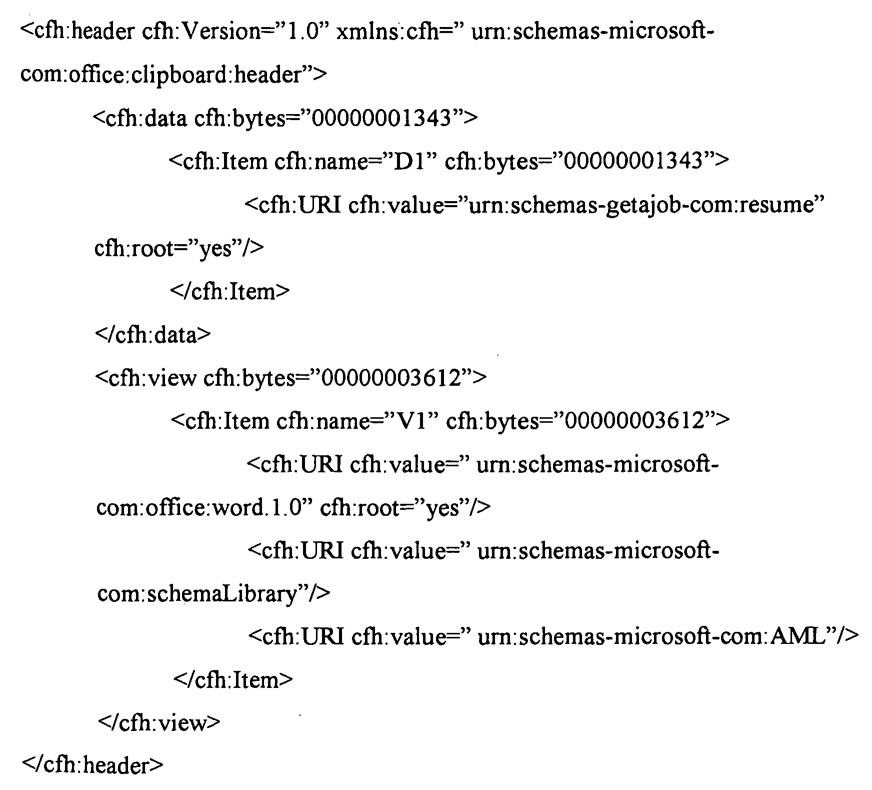

The CF_XML_VIEW data format ("VIEW") provides information to the consuming application as to the native XML programming of the providing application. By reading the data contained in the "VIEW" format, the consuming application may determine whether it is capable according to its own native XML programming to fully utilize the native XML programming of the providing application without the need to obtain additional XSLT transformation files during the pasting operation. The following is an example CF_XML_VIEW header format that may be associated with data cut or copied from a providing application.

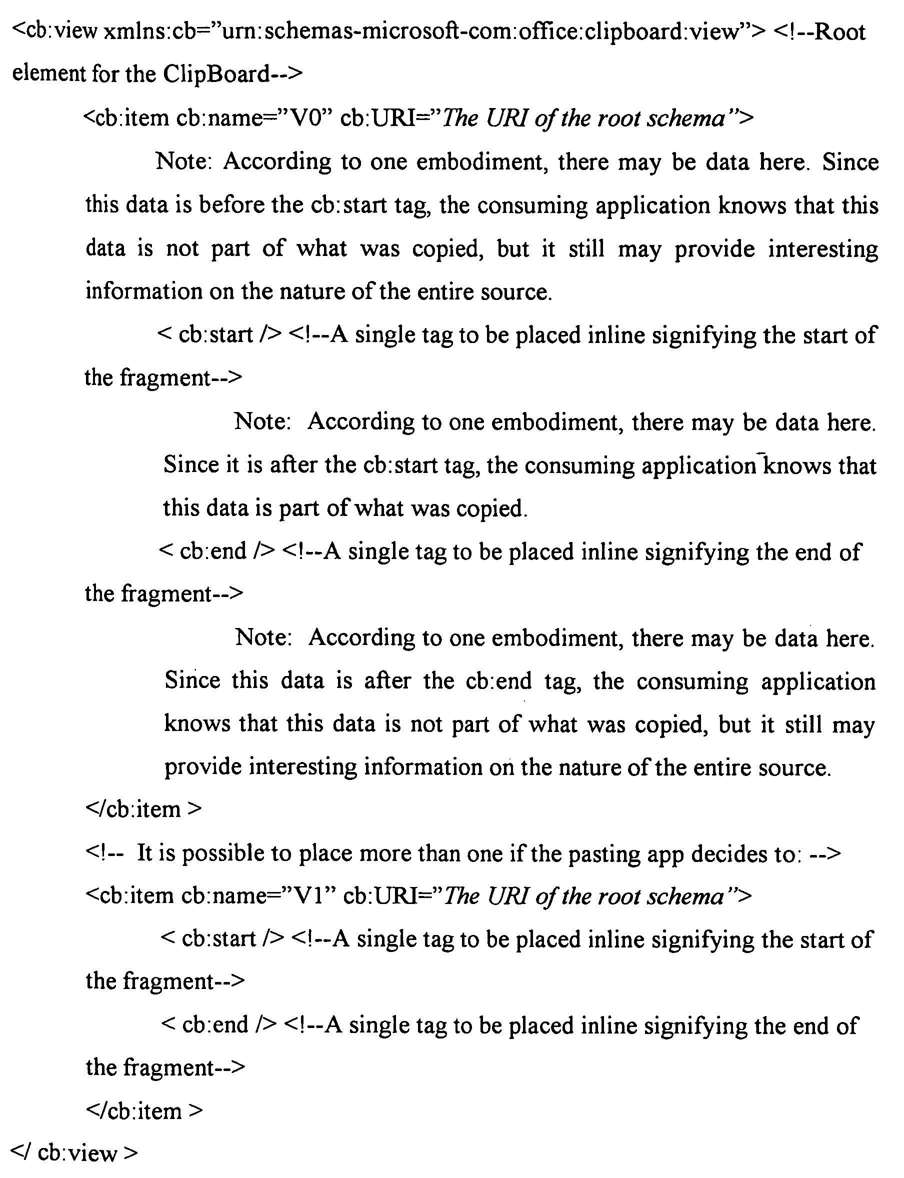

The CF_XML_DATA format ("DATA") provides information to the consuming application about XML namespaces associated with the cut or copied data from the providing application where those XML namespaces are not a part of the native XML programming of the providing application. For example, the "DATA" header may provide information to the copying application concerning an XML namespaces associated with a schema created by the user of the providing application, or information may be provided regarding an XML namespace associated with a third party schema, such as a publisher or stock market company schema for use in structuring data for consumption or presentation by users, as described above. The following is an example of a CF_XML_ DATA format that may be received by the consuming application to provide the consuming application with information regarding non-native XML namespaces associated with data cut or copied by the providing application.

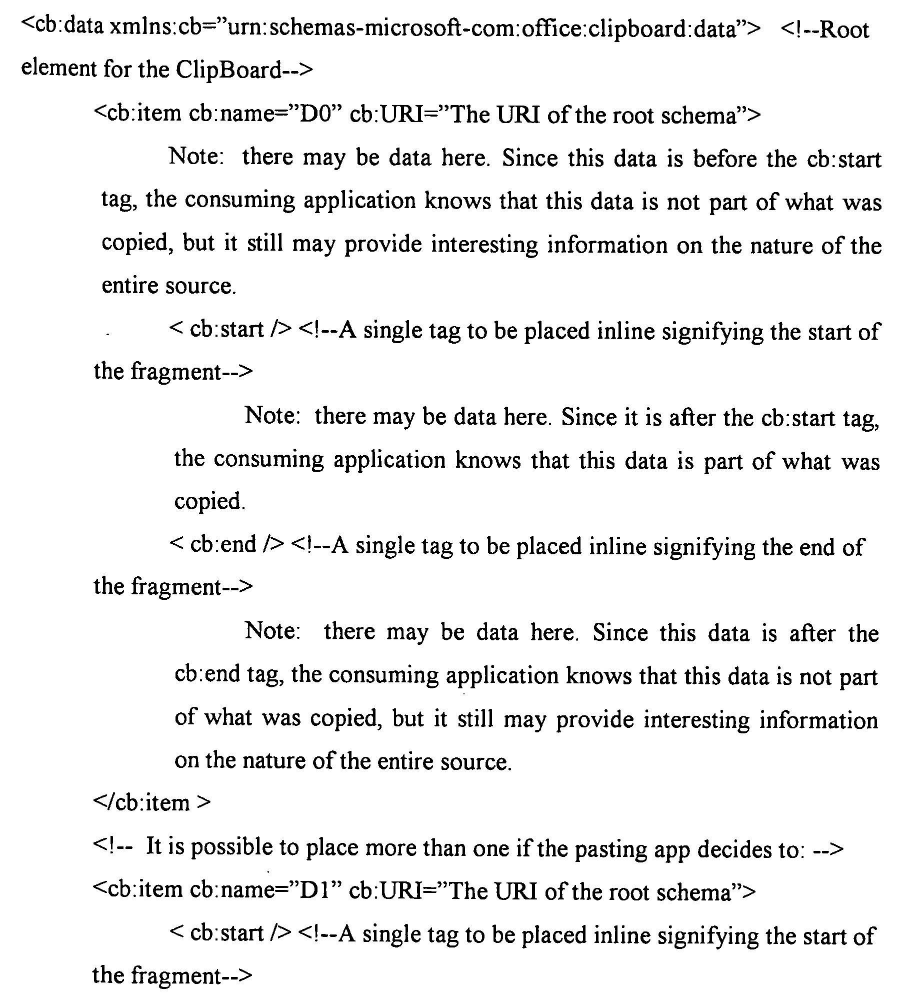

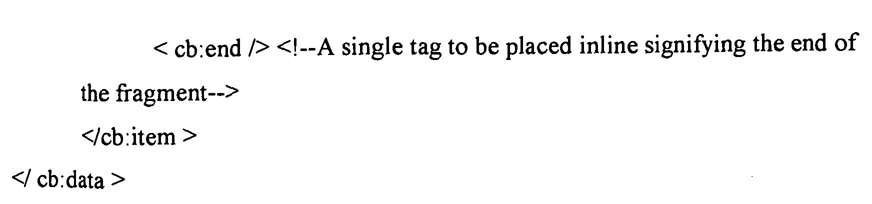

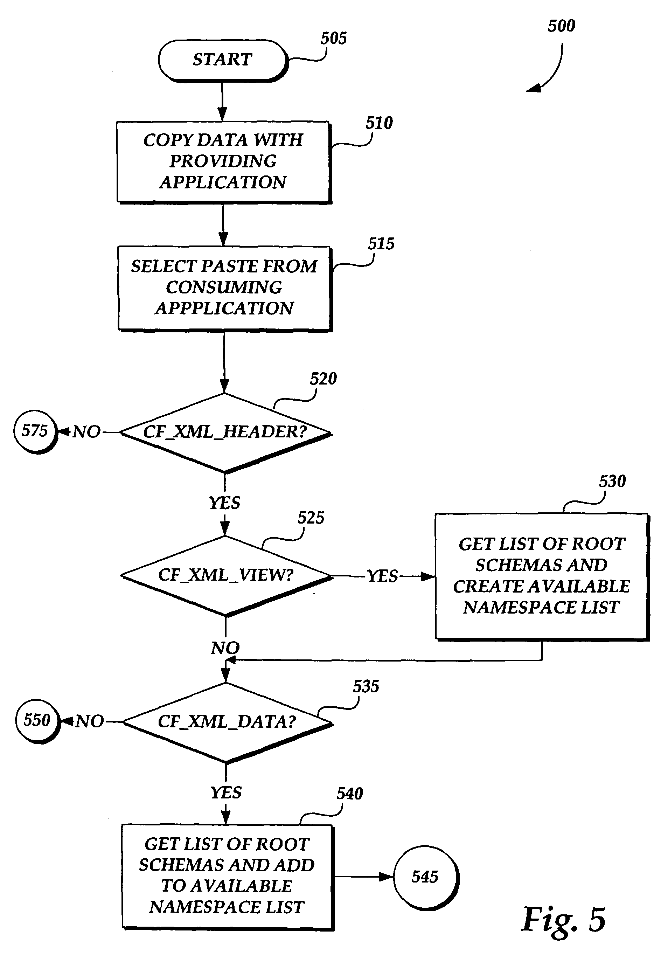

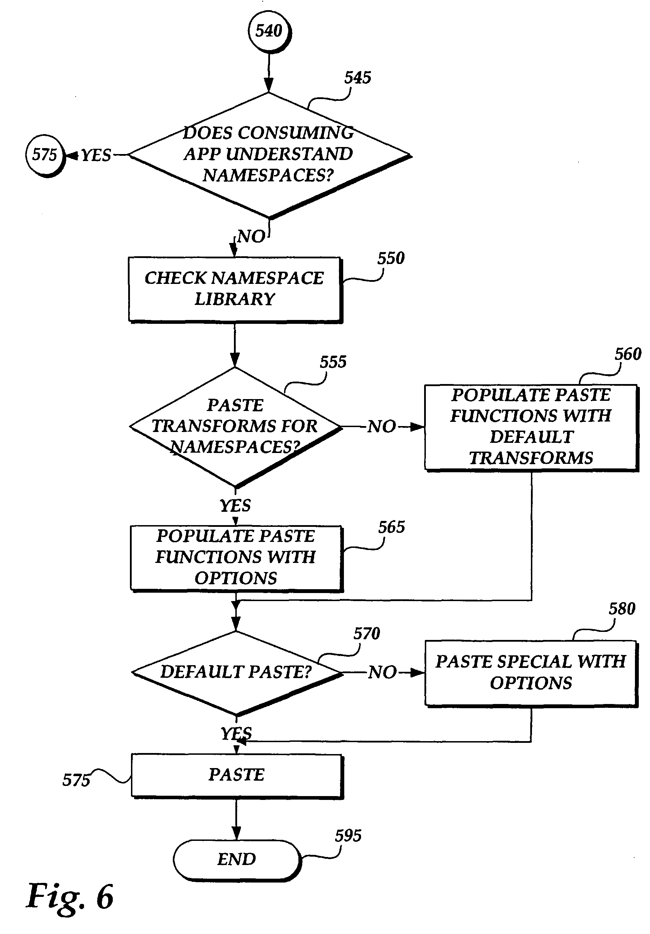

Figs. 5 and 6 are flow charts illustrating a method for enhancing the paste functionality of a consuming application according to an embodiment of the present invention. The method 500 begins at start step 505 and moves to step 510 where data from a providing application is cut or copied and saved to the clipboard 210 for subsequent pasting by a consuming application 220. At step 515, a user selects paste from a consuming application 220 for pasting the cut or copied data into a document in use with the consuming application. At step 520, the consuming application determines whether a CF_XML_HEADER format is associated with the cut or copied data. If no CF_XML_HEADER format is available, the method proceeds to step 575, Fig. 6, and the data is pasted without any enhanced paste functionality. As should be understood, as described above, if additional XML schemas and/or data structures are available to the consuming application, that information is provided to the consuming application via the CF_XML_HEADER format.

If the "HEADER" format is provided at step 520, the method proceeds to step 525 and a determination is made as to whether the data includes a CF_XML_VIEW format. If yes, the method proceeds to step 530 and the consuming application creates a list of the available namespaces specified in the header as being available for pasting the cut or copied data. For example, if the providing application is a spreadsheet application, the consuming application may need to call the namespace library for an available transformation file or other resource for assisting the consuming application (e.g., word processor) in pasting the cut or copied data according to the XML functionality of the providing application. The reason for the call to the namespace library is that the consuming application does not understand the available namespace, and needs to find additional information on how to handle it. If the XML namespaces are not in the available namespace list, the method proceeds to step 550 and the consuming application checks the namespace library 230 for additional resources that may be of assistance in pasting the cut or copied data received from the providing application.

If at step 535 a CF_XML_DATA format is provided, the method proceeds to step 540 and the consuming application calls the available namespace list to obtain transformation files and/or other resources associated with namespaces created at the providing application or received from a third party source external to the providing application, as described above. As should be understood, calling the available namespace list as described with reference to steps 530 and 540 may be accomplished by providing a user interface, as described above with reference to Fig. 3.

At step 545, Fig. 6, a determination is made as to whether the consuming application understands the namespaces and associated transformation files identified for the data cut or copied from the providing application. For example, if the consuming application is a word processing application and the providing application is a word processing application, the consuming application may not require any additional resources in the form of transformation files in order to provide the XML formatting associated with the cut or copied data. If so, the method proceeds to step 575, and the cut or copied data is pasted by the consuming application without paste functionality enhancement.

If the consuming application does not understand the namespaces and associated resources associated with the selected data, or if no namespaces or resources are available to the consuming application, the method proceeds to step 550 and the namespace library 230 is made available to the user to select additional namespaces and resources associated with the data contained in the CF_XML_DATA format received from the providing application. If the "DATA" format received from the providing application identifies a third party namespace associated with the cut or copied data, such as the XSLT file of a given publisher, an XSLT file required by the consuming application for pasting the data according to the identified namespace may be obtained for the consuming application from the namespace library 230. At step 555, a determination is made as to whether any available transformation files are selected by the user for use by the consuming application. If not, the method proceeds to step 560 and the paste functions of the user interface 310 are populated with the default functions, as illustrated in Fig. 3.

If resources, such as XSLT transformation files, are located in either the available namespace list or the namespace library, the method proceeds to step 565 and the paste user interface 310 is populated with the additional functionality selected by the user, as described above with reference to Fig. 3. At step 570, a determination is made as to whether the user selects a default generic paste function or whether the user selects a paste special function. If the user desires a paste special function, the method proceeds to step 580, and the user selects the desired paste special function. The method proceeds to step 575 where the data is pasted according to the paste function selected by the user. If at step 570, if the user does not desire to select a paste special function, the method proceeds to step 575 and the data is pasted without enhanced paste functionality as selected by the user. The method ends at step 595.

As described herein, methods and systems are provided for enhancing the paste functionality available to a computer software application for pasting data into a computer-generated document. It will be apparent to those skilled in the art that various modifications or variations may be made in the present invention without departing from the scope or spirit of the invention. Other embodiments of the invention will be apparent to those skilled in the art from consideration of the specification and practice of the invention disclosed herein.

## Claims

1. A method of enhancing the paste functionality of a computer software application, comprising:
opening a first document via a providing application;
selecting data from the first document for pasting to a second document via a consuming application;
saving the selected data to a memory location;
saving data associated with the selected data to the memory location for providing the consuming application information about the selected data;
if the data associated with the selected data identifies a first namespace associated with the selected data identifying one or more data types associated with the selected data, providing the first namespace to the consuming application;
selecting one of the one or more data types for pasting the selected data to the second document; and
obtaining a resource associated with the selected data type for preparing the data for pasting to the second document by the consuming application.

2. The method of Claim 1, prior to the step of obtaining a resource associated with the selected data type for preparing the data for pasting to the second document by the consuming application, parsing an available namespace list for the resources associated with the selected data; and if the available namespace list identifies the resource associated with the selected data, providing the resource to the consuming application.

3. The method of Claim 2, whereby if the available namespace list does not identify the resource associated with the selected data, parsing a namespace library for the resource associated with the selected data; and
if the namespace library identifies the resource associated with the selected data, providing the resource to the consuming application.

4. The method of Claim 3, whereby if a plurality of namespaces are identified by the data associated with the selected data, obtaining a second resource associated with one of the plurality of namespaces for preparing the data for pasting to the second document by the consuming application.

5. The method of Claim 4, further comprising providing a user selectable choice between pasting the selected data to the second document according to the first resource and pasting the selected data to the second document according to the second resource.

6. The method of Claim 4, further comprising providing a user selectable choice for pasting the selected data to the second document according one of one or more resources selected from one of a plurality of available namespaces where each of the plurality of available namespaces is associated with one or more resources.

7. The method of Claim 5, whereby saving the selected data to a memory location includes saving the selected data in an Extensible Markup Language (XML) format.

8. The method of Claim 7, whereby the first and second resources include Extensible Stylesheet Language Transformations (XSLT) for transforming the selected data from a first data type associated with the first document to a second data type for pasting the selected data to the second document.

9. The method of Claim 8, whereby if no resource is associated with the selected data type for preparing the data for pasting to the second document by the consuming application, pasting the selected data to the second document without enhanced paste functionality.

10. The method of Claim 9, whereby saving data associated with the selected data to the memory location includes saving the data to the memory location in a CF_ XML_HEADER format.

11. The method of Claim 10, whereby if the first namespace is identified as associated with the first document, then providing with the data associated with the selected data information for allowing the consuming application to locate the first namespace in the available namespace list or namespace library.

12. The method of Claim 11, whereby providing with the data associated with the selected data information for allowing the consuming application to locate the first namespace in the available namespace list or namespace library includes providing a version identifier for the first namespace, providing a uniform resource identifier for the first namespace, and providing a file size for the first namespace.

13. The method of Claim 12, whereby if the plurality of namespaces is identified as associated with the first document, then providing with the data associated with the selected data information for allowing the consuming application to locate the plurality of namespaces in the available namespace list or namespace library.

14. The method of Claim 13, whereby providing with the data associated with the selected data information for allowing the consuming application to locate the plurality of namespaces in the available namespace list or namespace library includes providing a version identifier for each of the plurality of namespaces, providing a uniform resource identifier for each of the plurality of namespaces, and providing a file size for each of the plurality of namespaces.

15. The method of Claim 10, whereby if the first namespace is identified as associated with the first document, providing the consuming application any data types associated with the first document according to the first namespace.

16. The method of Claim 15, whereby the data types associated with the first document according to the first namespace are provided to the consuming application via a CF_XML_View format.

17. The method of Claim 13, whereby if the plurality of namespaces is identified as associated with the first document, providing the consuming application one or more data types associated with the first document according to the plurality of namespaces.

18. The method of Claim 17, whereby the one or more data types associated with the first document according to the plurality of namespaces are provided to the consuming application via a CF_XML_Data format.

19. The method of Claim 1, whereby the providing application is a word processing application.

20. The method of Claim 1, whereby the providing application is a spreadsheet application.

21. The method of Claim 1, whereby the providing application is a slide presentation application.

22. The method of Claim 1, whereby the consuming application is a word processing application.

23. The method of Claim 1, whereby the consuming application is a spreadsheet application.

24. The method of Claim 1, whereby the consuming application is a slide presentation application.

25. The method of Claim 1, whereby saving the selected data to a memory location includes saving the selected data to a clipboard.

26. A method of enhancing the paste functionality of a computer software application, comprising:
opening a first document via a providing application;
applying structure to the first document according to a markup language;
selecting data from the first document for pasting to a second document;
saving the selected data to a memory location;
saving data associated with the selected data to the memory location for providing a consuming application information about the selected data;
opening a second document via the consuming application and selecting a consuming application paste function for pasting the selected data to the second document;
reading by the consuming application the data associated with the selected data;
in response to reading by the consuming application the data associated with the selected data, determining whether one or more namespaces are associated with the selected data defining permissible data content, data type and data structure for structure applied to the selected data;
obtaining by the consuming application a resource associated with one of the one or more namespaces for pasting the selected data to the second document; and
pasting the selected data to the second document according to the resource.

27. The method of Claim 26, prior to obtaining by the consuming application a resource associated with one of the one or more namespaces for pasting the selected data,
determining whether an available namespace list contains a desired namespace of the one or more namespaces for use by the consuming application;
if the available namespace list contains a desired namespace of the one or more namespaces for use by the consuming application, selecting the desired namespace; and
providing the selected namespace to the consuming application.

28. The method of Claim 27, whereby if the available namespace list does not contain a desired namespace of the one or more namespaces for use by the consuming application, determining whether a namespace library contains one or more resources for one of the one or more namespaces for use by the consuming application;
if the namespace library contains one or more desired resources for the one or more namespaces for use by the consuming application, selecting the desired resource from the namespace library; and
providing the selected namespace and resourceto the consuming application.

29. The method of Claim 28, further comprising providing a user selectable choice for pasting the selected data to the second document according to the selected namespace.

30. The method of Claim 29, whereby the markup language is the Extensible Markup Language (XML).

31. The method of Claim 30, whereby the resource is an Extensible Stylesheet Language Transformation file for transforming the selected data from a first data type associated with the first document to a second data type for pasting the selected data to the second document.

32. The method of Claim 29, whereby the step of saving data associated with the selected data to the memory location for providing the consuming application information about the selected data includes identifying whether any of the one or more namespaces is associated with the first document.

33. The method of Claim 32, whereby identifying whether any of the one or more namespaces is associated with the first document includes providing the consuming application information for locating any of the one or more namespaces on the available namespace list or at the namespace library.

34. A computer readable medium having stored thereon computer-executable instructions, which when performed by a computer, perform the steps of:
opening a first document via a providing application;
applying structure to the first document according to a markup language;
selecting data from the first document for pasting to a second document;
saving the selected data to a memory location;
saving data associated with the selected data to the memory location for providing a consuming application information about the selected data;
opening a second document via the consuming application and selecting a consuming application paste function for pasting the selected data to the second document;
reading by the consuming application the data associated with the selected data;
in response to reading by the consuming application the data associated with the selected data, determining whether one or more namespaces are associated with the selected data defining permissible data content, data type and data structure for structure applied to the selected data;
obtaining by the consuming application a resource associated with one of the one or more namespaces for pasting the selected data to the second document; and
pasting the selected data to the second document according to the resource.

35. The computer readable medium of Claim 34, prior to obtaining by the consuming application a resource associated with the one or more namespaces for pasting the selected data,
determining whether an available namespace list contains a desired namespace of the one or more namespaces for use by the consuming application;
if the available namespace list contains a desired namespace of the one or more namespaces for use by the consuming application, selecting the desired namespace; and
providing the selected namespace to the consuming application.

36. The computer readable medium of Claim 35, whereby if the available namespace list does not contain a desired namespace of the one or more namespaces for use by the consuming application, determining whether a namespace library contains a desired namespace of the one or more namespaces for use by the consuming application;
if the namespace library contains one or more desired resources for the one or more namespaces for use by the consuming application, selecting the desired resource from the namespace library; and
providing the selected namespace and resource to the consuming application.

37. The computer readable medium of Claim 36, further comprising providing a user selectable choice for pasting the selected data to the second document according to the selected namespace.

38. The computer readable medium of Claim 37, whereby the markup language is the Extensible Markup Language (XML).

39. The computer readable medium of Claim 38, whereby the step of saving data associated with the selected data to the memory location for providing the consuming application information about the selected data includes identifying whether any of the one or more namespaces is associated with the first document.

40. The computer readable medium of Claim 39, whereby identifying whether any of the one or more namespaces is associated with the first document includes providing the consuming application information for locating any of the one or more namespaces on the available namespace list or at the namespace library.

41. A method for pasting data from a copying application to a consuming application, comprising:
applying a first Extensible Markup Language (XML) element to a beginning of a region of a first document, where the region is selected for copying from the copying application and for pasting to the consuming application;
applying a second XML element to an end of the selected region;
providing information in a header associated with the selected region, where the information includes an identification of available XML namespaces and pointers to a clipboard format identification that corresponds to each of the available namespaces;
providing information in the header on a file size for each the available namespaces; and
providing one or more namespaces of the available namespaces on a clipboard to allow the consuming application to choose among the one or more namespaces for pasting the data from the copying application.
